# EUROPÄISCHE PATENTSCHRIFT

(11) **EP 0 410 112 B1**
(45) Veröffentlichungstag und Bekanntmachung des Hinweises auf die Patenterteilung: **04.08.1993**
(21) Anmeldenummer: 90110166.7
(22) Anmeldetag: 29.05.1990
(51) Int. Cl.: A01C 17/00

(54) **Schleuderstreuer für rieselfähiges Streugut, insbesondere Dünger**
Centrifugal spreader for pourable material, especially fertilizer
Epandeur centrifuge pour matériau coulant, en particulier engrais

(30) Priorität: 22.07.1989 DE 3924334
(43) Veröffentlichungstag der Anmeldung: 30.01.1991
(73) Patentinhaber: RAUCH LANDMASCHINENFABRIK GMBH, D-76545 Sinzheim (DE)
(72) Erfinder: Rauch, Norbert, D-7573 Sinzheim (DE)
(74) Vertreter: Lichti, Heiner, Dipl.-Ing.

(56) Entgegenhaltungen:
- EP-A- 0 225 836
- DE-A- 3 541 415
- DE-A- 3 643 854
- FR-A- 2 563 072

## Beschreibung

Die Erfindung betrifft einen Schleuderstreuer für rieselfähiges Streugut, insbesondere Dünger, der vom Dreipunkt eines Schleppers aufgenommen und antriebsmäßig mit dessen Zapfwelle über eine Gelenkwelle verbunden ist, mit einem Rahmen, einem von diesem aufgenommenen Vorratsbehälter mit geneigten Seitenwänden und Boden, wenigstens zwei einstellbaren Ausläufen beiderseits der Fahrtrichtung und je einer darunter angeordneten Schleuderscheibe mit Wurfflügeln sowie wenigstens einem im Vorratsbehälter umlaufenden Rührwerk, wobei dieses und die Schleuderscheiben - letztere über einen gemeinsamen Getriebezug synchron - von der Gelenkwelle angetrieben sind.

Schleuderstreuer des vorgenannten Aufbaus (DE-A-3643 854) sind - zumindest soweit sie für das Düngerstreuen eingesetzt werden - fast ausschließlich als Zweischeibenstreuer ausgebildet, um ein zu beiden Seiten des Streuers symmetrisches Streubild mit gleichmäßiger Streudichte zu erhalten. Dabei wird als Ideal ein dreieckförmiges Streubild angestrebt, um beim Anschlußfahren durch entsprechende Überlappung benachbarter Streubilder eine gleichmäßige (lineare) Verteilung zu erhalten.

Bei der Mehrzahl bekannter Zweischeibenstreuer läuft das im Vorratsbehälter enthaltene Streugut den Ausläufen unter Schwerkraft zu, womit sich gesonderte Fördereinrichtungen im Behälter erübrigen. Dies setzt jedoch voraus, daß die Wände des Behälters trichterförmig zum Boden zusammenlaufen. Darüber hinaus muß aber das Streugut im Behälter fließfähig gehalten werden, was durch entsprechende Rührwerke geschieht, die das Streugut zumindest oberhalb der Ausläufe rieselfähig halten. Bekannt sind Eintrichter-Streuer (DE-A-35 41 415), deren Behälter durch einen einzigen Boden mit zwei Ausläufen abgeschlossen ist und die mit einem zentralen Rührwerk, das beide Ausläufe überstreicht, auskommen. Bei diesem Streuer werden die beiden Schleuderscheiben von der Zapfwelle über die Gelenkwelle und ein Eckgetriebe synchron angetrieben. An diesen Getriebezug ist die zentral angeordnete Rührwerkswelle über eine Untersetzung angeschlossen, durch die vermieden wird, daß der Dünger mechanisch beansprucht wird und dadurch ein hoher Mehlkornanteil entsteht. Vorteilhaft ist die einfache Bauweise, nachteilig jedoch die notwendigerweise eng beieinander liegenden Schleuderscheiben, wodurch die Streubreite und damit die Arbeitsbreite begrenzt ist. Auch das Nutzvolumen des Behälters ist aufgrund der notwendigen Wandneigung eingeschränkt. Ein weiterer Nachteil ergibt sich aus der Tatsache, daß das Rührwerk über dem einen Auslauf in Drehrichtung der darunter umlaufenden Schleuderscheibe, über dem anderen Auslauf jedoch entgegen der Drehrichtung der dieser zugeordneten Schleuderscheibe umläuft. Dadurch wird das Streugut in unterschiedlicher Richtung bzw. unterschiedlicher Dichte mit Bezug auf die Schleuderscheiben aus den Ausläufen ausgetragen, so daß die Aufgabepunkte auf die beiden Schleuderscheiben nicht spiegelsymmetrisch sind. Hierdurch wiederum ergeben sich unterschiedliche Abflugverhältnisse an den Wurfflügeln und ein leicht unsymmetrisches Streubild.

Daneben sind Streuer mit einem großvolumigeren Doppeltrichter bekannt (DE-A-36 43 854), wobei jeder Trichter unten in einem spitzen oder kleinen flachen Boden endet und die Ausläufe jeweils an der Seite jedes Trichters oder in dem kleinen Boden angeordnet sind. Auch hier werden die Schleuderscheiben über ein Eckgetriebe angetrieben. Hier ist für jeden Trichter ein Rührwerk notwendig, die entweder auf der Schleuderscheibenwelle sitzen, was den Nachteil hat, daß die Rührwerke mit zu hoher Drehzahl umlaufen und das Düngerkorn zerkleinern, oder es ist je ein Rührwerk an einer quer liegenden, die inneren Trichterwände durchdringenden Welle an deren Enden angeordnet, die über einen vom Eckgetriebe zentral abgenommenen untersetzenden Kettentrieb angetrieben ist. Diese Ausführung ist konstruktiv aufwendig und funktionell störanfällig, hat jedoch den Vorteil, daß sie das Streugut schont. Beide Ausführungsformen haben den Vorteil, daß die Rührwerke den Aufgabepunkt des Streugutes auf die Schleuderscheiben nicht unterschiedlich für beide Scheiben beeinflussen. Aufgrund des größeren Scheibenabstandes ergibt sich in beiden Fällen auch eine größere Streubreite bzw. Arbeitsbreite. Von Nachteil ist bei bei den Doppeltrichter-Behältern, daß sich das Streugut bei hängigem Gelände oder bei Kurvenfahrt von einem in den anderen Trichter verlagern kann, so daß der Füllstand unterschiedlich ist und der Behälter nicht leergestreut werden kann, wenn nur ein Trichter keinen Dünger mehr enthält.

Bei allen bekannten Ausführungsformen lassen sich Streubild und Arbeitsbreite durch die Drehzahl der Scheiben, vor allem aber durch Anheben und/oder Neigen des Streuers beeinflussen. Auf diese Weise läßt sich auch das unterschiedliche Abflugverhalten verschiedener Düngersorten (grob- oder feinkörnig, unregelmäßige oder gleichmäßige Kornform) in Grenzen berücksichtigen. Im allgemeinen trägt man aber verschiedenen Düngersorten durch verschiedene, austauschbare Schleuderscheiben oder durch Scheiben mit verstellbaren Wurfflügeln Rechnung. Gleiches gilt für das Grenzstreuen, bei dem die der Feldgrenze zugekehrte Schleuderscheibe ein völlig anderes, nämlich steilflankiges Streubild, als die andere Schleuderscheibe aufweisen muß. Das Neigen des Streuers hat bei allen bekannten Ausführungen den weiteren Nachteil, daß das Nutzvolumen des Behälters nicht mehr voll ausgenutzt werden kann, zumal dabei noch die beim Fahren auftretenden Beschleunigungs- und Verzögerungskräfte und die dadurch eintretende Streugut-Verlagerung berücksichtigt werden muß. Auch sind dem Anheben und Neigen Grenzen gesetzt, um die Gelenkwelle nicht zu sehr auszuknicken.

Der Erfindung liegt die Aufgabe zugrunde, einen Schleuderstreuer des eingangs genannten Aufbaus so auszubilden, daß eine Veränderung der Arbeitsbreite und eine Anpassung an verschiedene Düngersorten ohne Anheben und/oder Neigen des Streuers möglich ist.

Diese Aufgabe wird erfindungsgemäß dadurch gelöst, daß der Getriebezug mit den Schleuderscheiben am Rahmen im wesentlichen in Fahrtrichtung verschiebbar geführt und zur Einstellung des die Relativlage zwischen jedem Auslauf und der ihr zugeordneten Schleuderscheibe bestimmenden Aufgabepunktes am Rahmen festsetzbar ist, und daß die Antriebsverbindung der Gelenkwelle mit dem Rührwerk von derjenigen mit den Schleuderscheiben entkoppelt ist oder der Verschiebebewegung des Getriebezugs mit den Schleuderscheiben folgt.

Mit der erfindungsgemäßen Ausbildung des Schleuderstreuers ist ein neues Prinzip verwirklicht, das sich in gleich vorteilhafter Weise bei einem Eintrichter-, wie bei einem Doppeltrichter-Behälter verwirklichen läßt. Durch die Möglichkeit der Verlagerung des Getriebezugs mit den Schleuderscheiben läßt sich für beide Scheiben der Aufgabepunkt und dadurch die Verweilzeit des Streugutes in den Wurfflügeln verändern. Dadurch wiederum läßt sich die Abfluggeschwindigkeit und der Abflugpunkt des einzelnen Streugutpartikels variieren. Dies wiederum gibt die Möglichkeit der Beeinflussung der Streubreite, aber auch der Berücksichtigung verschiedener Düngersorten, die in den Wurfflügeln ein unterschiedliches Strömungs-(Beschleunigungs-) Verhalten zeigen. Ein Anheben und/oder Neigen des Streuers ist nicht mehr oder nur dann notwendig, wenn eine noch größere Variationsbreite hinsichtlich Arbeitsbreite und Düngersorten erfaßt werden soll. Damit entfallen auch alle mit dem Neigen verknüpften Nachteile beim Ein- und Zweitrichter-Streuer hinsichtlich des Nutzvolumens, der ungleichmäßigen Düngerverteilung im Behälter etc. Insbesondere ist die konstruktiv und kostenmäßig günstigere Eintrichter-Lösung in jeder Hinsicht mit den bekannten Zweitrichter-Lösungen wettbewerbsfähig.

Gemäß einem bevorzugten Ausführungsbeispiel ist vorgesehen, daß der Getriebezug mit den Schleuderscheiben in einer horizontalen Ebene begrenzt drehbar ist. Dadurch können die Aufgabepunkte für beide Scheiben in Grenzen unterschiedlich eingestellt werden, was insbesondere für das Grenzstreuen von Bedeutung ist.

In konstruktiver Hinsicht läßt sich die Erfindung in mehrfacher Weise verwirklichen. So ist es möglich, daß das Rührwerk über einen von der Gelenkwelle angetriebenen Exzenter und ein Schrittschaltwerk in einer Drehschrittbewegung angetrieben ist. Statt dessen kann vorgesehen sein, daß das Rührwerk über einen von der Gelenkwelle angetriebenen Exzenter oszillierend angetrieben ist. Die erstgenannte Ausführungsform hat den Vorteil, daß stets andere Anteile des Streugutvolumens im Behälter in Bewegung versetzt werden, während sich die letztgenannte Ausführung in konstruktiv einfacher Hinsicht verwirklichen läßt. In beiden Fällen ergibt sich der Vorteil, daß das Rührwerk auf das Streugut nur geringe Beschleunigungskräfte zur Wirkung bringt, so daß auch bei der Eintrichter-Ausführung der Aufgabepunkt auf beide Schleuderscheiben nicht oder nur unwesentlich beeinflußt wird.

Gemäß einer anderen Ausführungsform ist vorgesehen, daß das Rührwerk über einen der Verschiebebewegung des Getriebezugs mit den Schleuderscheiben folgenden, selbstspannenden Endlostrieb angetrieben ist.

Im einfachsten Fall kann es sich um einen Ketten- oder Riementrieb oder einen Zahnriementrieb handeln, der die Verschiebebewegung des Getriebezugs mit den Schleuderscheiben durch entsprechend nachgiebige, z. B. federnd gelagerte Umlenkungen od. dgl. aufnimmt.

Die gleiche Wirkung läßt sich dadurch erzielen, daß das Rührwerk über einen der Verschiebebewegung des Getriebezugs mit den Schleuderscheiben folgenden Friktionstrieb angetrieben ist, da Friktionstriebe mit zylindrischen oder kegeligen Scheiben gleichfalls einer Verstellbewegung des Getriebezugs folgen können.

Im Falle eines Exzentertriebs des Rührwerks kann vorgesehen sein, daß der Exzenter auf der Eingangswelle des Getriebezugs der Schleuderscheiben angeordnet ist, wobei es vorteilhaft ist, wenn der Exzenter außerhalb des den Getriebezug der Schleuderscheiben umgebenden Gehäuses angeordnet ist, so daß der Antrieb des Rührwerks problemlos zugänglich ist und im Bedarfsfall außer Kraft gesetzt werden kann.

In weiterhin vorteilhafter Ausgestaltung kann vorgesehen sein, daß der Exzenter von einer federnden Gabel umgriffen ist und das nachgeschaltete Schrittschaltwerk an eine im Boden des Vorratsbehälters drehbar gelagerte, das Rührwerk aufweisende Achse mit einem die Oszillationsbewegung der Gabel in eine Drehschrittbewegung umsetzenden Freilauf aufweist.

Diese Ausbildung hat den Vorteil, daß der Antrieb des Rührwerks bzw. der Rührwerke problemlos über Eck geführt werden kann und keine zusätzliche Bauhöhe zwischen Getriebegehäuse und Trichterboden benötigt wird.

Diese Ausführungsform wird noch dadurch optimiert, daß das Drehlager der Rührwerksachse in einem hutförmig in den Vorratsbehälter hineingezogenen Abschnitt des Bodens angeordnet ist, und daß das Rührwerk eine diesen Bodenabschnitt übergreifende hutförmige Nabe mit sich über beide Ausläufe bodennah und im wesentlichen bodenparallel erstreckenden Rührfingern aufweist. Auf diese Weise beschränkt sich der notwendige Platzbedarf für die Antriebsverbindung zwischen Gelenkwelle und Rührwerk auf eine unterhalb des Bodens verlaufende Koppel zwischen Federgabel und Drehlager bzw. Freilauf. Hierbei kann es sich im einfachsten Fall um einen bodenparallel verlaufenden Hebel handeln.

In weiterhin zweckmäßiger Ausführung ist vorgesehen, daß die Nabe des Rührwerks auf der Achse lösbar, z. B. mittels eines Bajonettverschlusses befestigt ist, so daß das Rührwerk zu Zwecken der Reparatur und Wartung des Streuers entfernt und der Behälter abgenommen werden kann.

Vorzugsweise ist der Rührwerksantrieb so ausgebildet, daß der Exzenter und das Schrittschaltwerk so ausgebildet sind, daß ein Exzenterhub einen Drehschritt eines Rührfingers er zeugt, dessen Bogenwinkel etwa dem von einem Auslauf eingenommenen Bogenwinkel entspricht.

Mit dieser Ausführung wird bei jedem Umlauf der Gelenkwelle bzw. der Eingangswelle ein Rührfinger einmal über den Auslauf bewegt, so daß das Streugut ausreichend fließfähig, andererseits jedoch besonderes schonend in Bewegung gehalten wird.

Es ist weiterhin von Vorteil, wenn die Rührfinger in einem Abstand voneinander angeordnet sind, der etwa dem von dem Auslauf eingenommenen Bogenwinkel entspricht, so daß sichergestellt ist, daß sich stets ein Rührfinger über jedem Auslauf bewegt.

In einfachster Ausgestaltung ist vorgesehen, daß der Getriebezug der Schleuderscheiben zwischen zwei fahrtrichtungsparallelen Trägern des Rahmens angeordnet und an diesen verschiebbar geführt ist, wobei an den Trägern Stellspindeln zum Verschieben des Getriebezugs sowie Mittel zum Festsetzen desselben in der eingestellten Lage vorgesehen sein können.

Vorzugsweise sind zwischen dem Getriebezug und den Führungen Gelenke angeordnet, die ein begrenztes Verschwenken des Getriebezugs in einer horizontalen Ebene gestatten. Mit dieser Ausbildung lassen sich die Stellspindeln getrennt betätigen, ohne daß es in den Führungen zum Klemmen kommt, andererseits läßt sich der Aufgabepunkt für beide Schleuderscheiben unterschiedlich einstellen, was für das Grenzstreuen vorteilhaft ist.

Eine weiterhin bevorzugte Ausführungsform zeichnet sich dadurch aus, daß die Schleuderscheiben eine stark gewölbte Scheibe mit entsprechend steil ansteigenden Wurfflügeln aufweisen, so daß die auf den Scheiben drehwinkelversetzt angeordneten Wurfflügel mit ihren äußeren Enden einander überlappende Kreisbahnen beschreiben.

Bei der vorgenannten Ausführung wird der konstruktiv notwendige Freiraum zwischen Getriebe-Oberseite und Boden-Unterseite optimal genutzt und die Bauhöhe des Streuers nicht durch Toträume beeinträchtigt. Auch hierbei ist die Nabe der Schleuderscheibe mit Vorteil hutförmig nach oben gezogen, so daß der das Getriebegehäuse überragende Wellenstumpf von der Nabe übergriffen wird und der tiefste Punkt der Scheibe in der Nähe der Getriebe-Oberseite liegt. Durch die Überlappung der Wurfflügelbahnen können einerseits lange Wurfflügel bei gleichwohl geringem Scheibenabstand eingesetzt werden.

Bei Düngerstreuern müssen zur Einstellung auf verschiedene Düngersorten und auf die aktuelle Konsistenz des Düngers Abstreuproben im Stand vorgenommen werden. Zu diesem Zweck muß eine Schleuderscheibe abgenommen und muß der aus dem Auslauf fließende Dünger am Getriebegehäuse vorbei in ein auf den Boden stehendes Behältnis geleitet werden können. Hierzu dienen Leitorgane, wie Rutschen, Schächte od. dgl. Im Rahmen der Erfindung ist vorgesehen, daß das Leitorgan ein abgewinkelter Schacht ist, der mit seinem unteren Abschnitt in einer am Getriebegehäuse angeordneten manschettenartigen Halterung drehbar und begrenzt axial verschiebbar gelagert ist.

Der Schacht kann im Gegensatz zu den bekannten Ausführungen ständig am Streuer verbleiben. Er kann aus einer nach außen geschwenkten unwirksamen Lage durch Drehen in der Manschette mit seinem oberen Abschnitt unter den Auslauf geschwenkt und durch axiales Verschieben über den Auslauf geschoben werden. Gegebenenfalls kann für die Abstreuprobe der Getriebezug in eine solche Position verschoben werden, daß der Auslauf dem Schacht am nächsten liegt und nur die kurzestmögliche Strecke quer zum Auslauf zu überbrücken ist.

Schließlich ist gemäß einem Ausführungsbeispiel vorgesehen, daß der Vorratsbehälter mit dem Rührwerk, dem Schrittschaltwerk und der federnden Gabel eine Baueinheit bilden, die lösbar am Rahmen befestigt ist.

Nachstehend ist die Erfindung anhand von in der Zeichnung gezeigten Ausführungsbeispielen erläutert. In der Zeichnung zeigen:
- Figur 1: eine schematische Ansicht auf die Rückseite eines Schleuderstreuers;
- Figur 2: eine Draufsicht auf das Getriebe;
- Figur 3: eine Seitenansicht auf die Darstellung gemäß Figur 2;
- Figur 4: eine der Figur 2 entsprechende Draufsicht ohne den Rahmen des Streuers;
- Figur 5: eine Stirnansicht auf die Eingangswelle des Getriebes;
- Figur 6: einen Schnitt durch das Rührwerk;
- Figur 7: eine Draufsicht auf die Darstellung gemäß Figur 6;
- Figur 8: eine vergrößerte, teilweise geschnittene Detailansicht im Bereich einer Schleuderscheibe;
- Figur 9: eine weitere Detailansicht im Bereich eines Auslaufs und
- Figur 10: eine gegenüber der Darstellung in Figur 9 um 90 Grad versetzte Detailansicht.

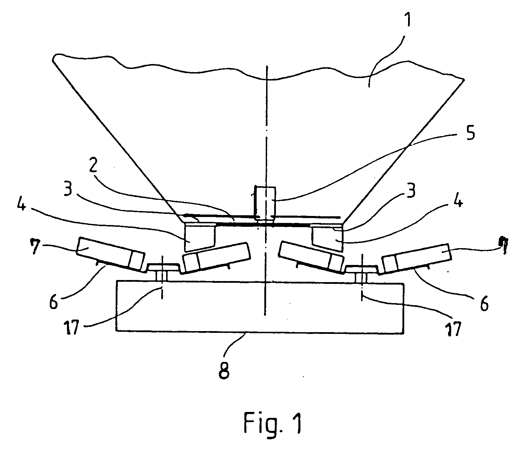

Der in Figur 1 gezeigte Schleuderstreuer weist einen Behälter 1 mit einem Boden 2 auf, der mit zwei Auslauföffnungen 3 und daran anschließenden, schachtartigen Ausläufen 4 versehen ist. Innerhalb des Behälters 1 läuft ein Rührwerk 5 zum Lockern des Streugutes um. Unterhalb jedes Auslaufs 4 ist eine Schleuderscheibe 6 mit jeweils zwei Wurfflügeln 7 angeordnet, die von der nicht gezeigten Zapfwelle über eine Gelenkwelle und einem in dem Getriebegehäuse 8 untergebrachten Getriebezug synchron angetrieben wird.

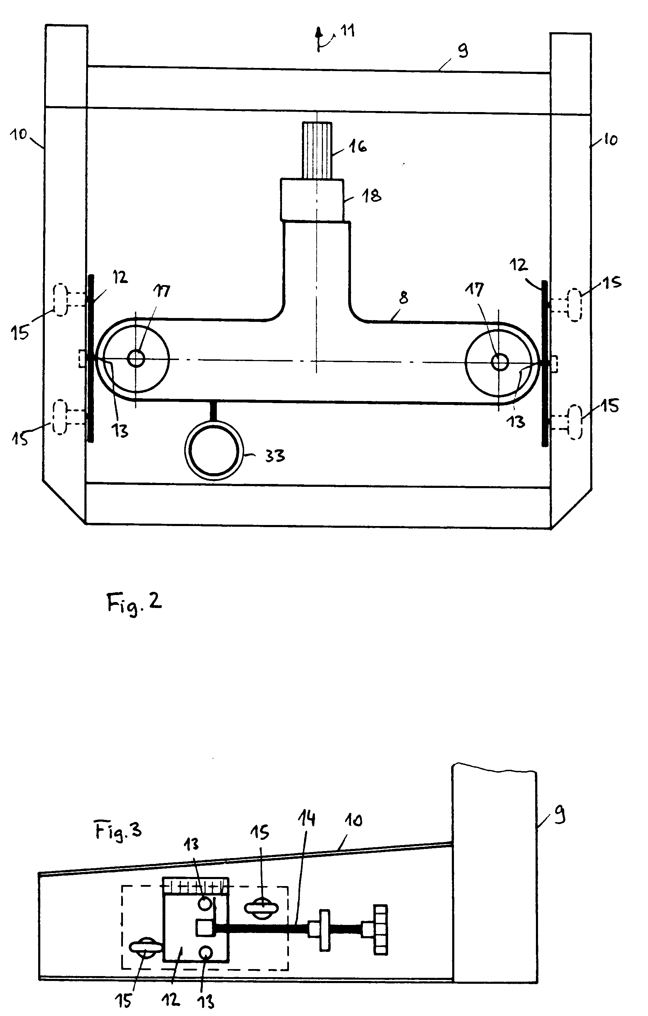

Der Schleuderstreuer weist einen den Vorratsbehälter 1 aufnehmenden Rahmen 9 (Figur 2) auf, der zwei den Behälter etwa horizontal untergreifende Träger 10 besitzt, die parallel zueinander und zur Fahrtrichtung 11 verlaufen. Die Träger 10 weisen Führungen auf, in denen das Getriebegehäuse 8 mit einer Führungsplatte 12 in und entgegen der Fahrtrichtung 11 verschiebbar ist. Zwischen den Führungsplatten 12 und dem Getriebegehäuse sind jeweils zwei Gelenke 13 übereinander angeordnet, um das Getriebegehäuse 8 an beiden Trägern 10 verkantungsfrei getrennt verschieben zu können.

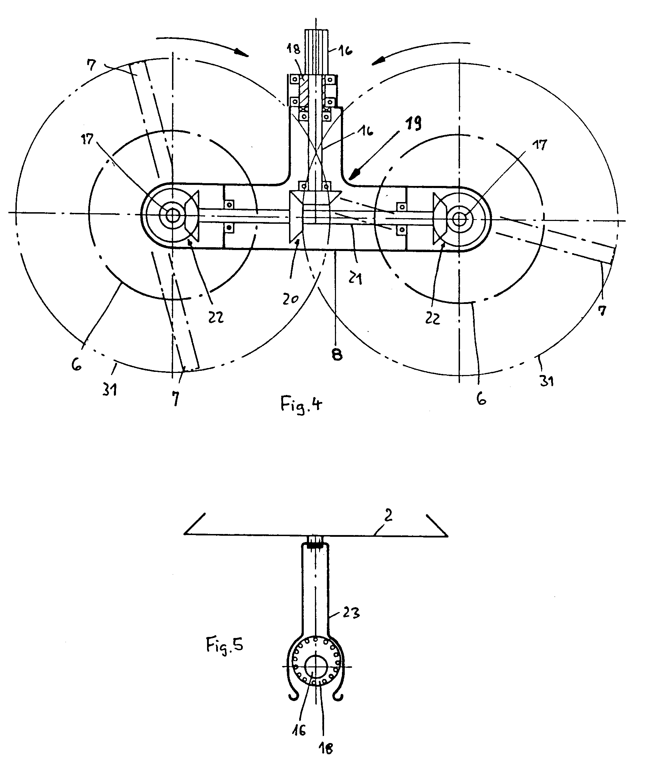

Zum Verstellen dient je eine an den Außenseiten der Träger 10 gelagerte Stellspindel 14, deren Stellweg über einen Zeiger und eine Skala am Träger ablesbar ist (Figur 3). Der Stellweg ist ein Maß für die Verlagerung des Getriebezugs mit den Schleuderscheiben 6 gegenüber den Ausläufen 4 am Vorratsbehälter 1 und damit ein Maß für die Verlagerung des Aufgabepunktes des Streugutes auf die Schleuderscheiben. Zum Festsetzen des Getriebegehäuses 8 in der eingestellten Lage dienen Knebelschrauben 15, deren Bolzen in Langlöchern an den Trägern 10 geführt sind.

In Figur 2 sind die Eingangswelle 16 des Getriebezugs und die Ausgangswellen 17 für die beiden Schleuderscheiben 6 erkennbar. Die Eingangswelle weist ein Vielkeilprofil auf, auf das die Gelenkwelle aufsteckbar ist. Auf der Eingangswelle sitzt ein Exzenter 18 als Teil der Antriebsverbindung zu dem Rührwerk 5. Auf dem Exzenter 18 ist über ein Wälzlager eine Rohrhülse aufgesetzt. Der Getriebezug 19 (Figur 4) ist als Eckgetriebe mit Kegelrädern 20 ausgebildet, die eine Querwelle 21 mit je einem weiteren Kegelradpaar 22 treiben, das wiederum je eine der Ausgangswellen 17 treibt, auf denen die Schleuderscheiben 6 sitzen.

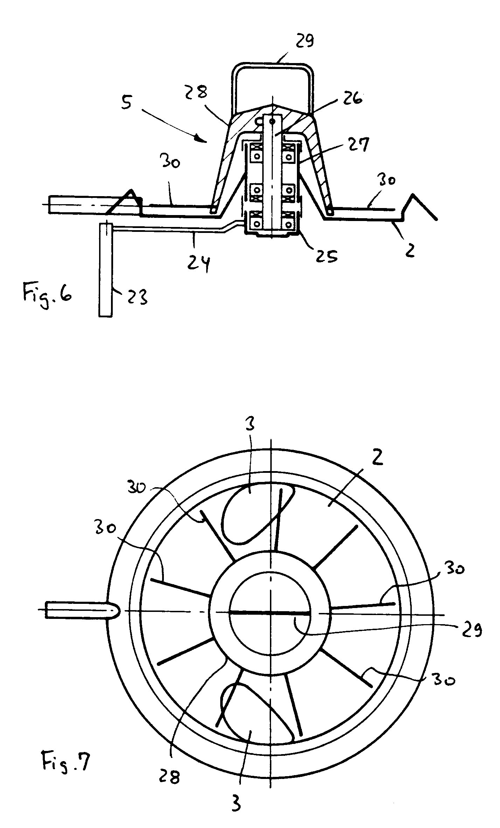

Der Exzenter 18 auf der Eingangswelle 16 des Getriebezugs 19 bzw. die auf ihm gelagerte Rohrhülse ist von einer federnden Gabel 23 übergriffen (Figur 5), die über einen senkrecht zu ihr und unterhalb des Bodens 2 angeordneten Hebel 24 (Figur 6) auf einen Freilauf 25 wirkt, der auf einer den Boden 2 durchsetzenden Achse 26 des Rührwerks 5 sitzt. Die Achse 26 ist in Kugellagern am Boden 2 gelagert, der zu diesem Zweck unter Bildung einer Lagerhülse 27 nach oben eingezogen ist. Auf der Achse 26 ist das Rührwerk 5 mit einer hutförmigen Nabe 28 lösbar befestigt, beispielsweise mit einem Bajonettverschluß. Zum Erleichtern des Ein- und Ausbaus ist die Nabe 28 mit einem Handgriff 29 versehen. Das Rührwerk weist einzelne Rührfinger 30 auf, die auf einer die Auslauföffnungen 3 überstreichenden Bahn umlaufen. Die Rührfinger 30 bestehen vorzugsweise aus Federstahl und weisen einen Abstand voneinander auf, der etwa dem von der Auslauföffnung 3 eingenommenen Bogenwinkel entspricht.

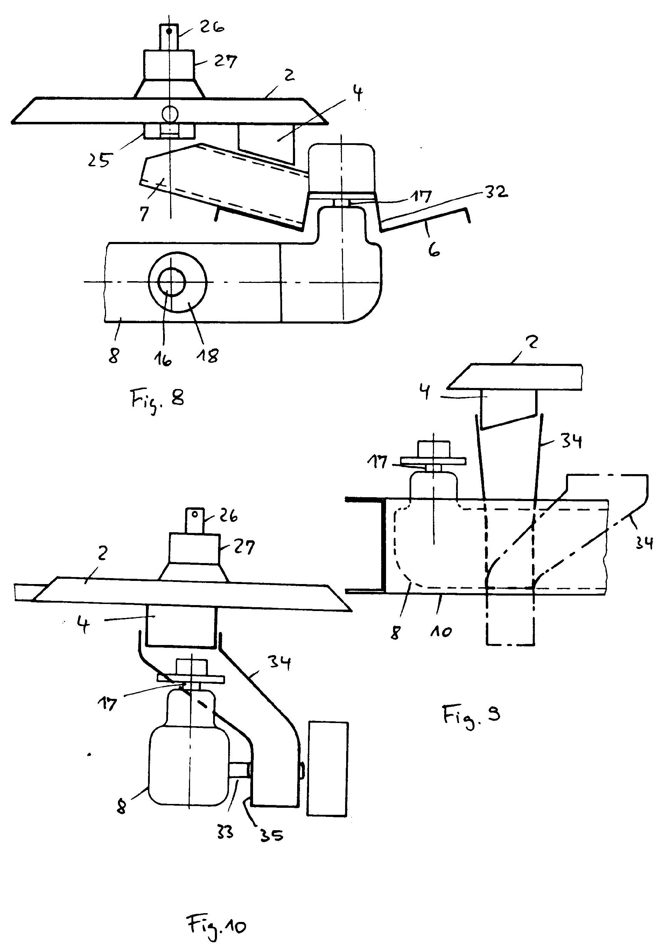

Figur 8 zeigt eine Detailansicht im Bereich einer Schleuderscheibe mit Blick auf die Eingangswelle 16 des Getriebezugs. Die Schleuderscheibe 6 ist tellerartig mit relativ steilem Winkel ausgebildet, so daß die Wurfflügel 7 gleichfalls relativ steil nach oben verlaufen. Die Ausgangswellen 17 des Getriebes bzw. die Schleuderscheiben 6 sind mit einem solchen Abstand angeordnet, daß sich die Bewegungsbahnen 31 der äußeren Enden der Wurfflügel überlagern, wie in Figur 4 mit den äußeren strichpunktiert wiedergegebenen Kreisbahnen angedeutet ist. Um aufgrund der steil angestellten Wurfflügel 7 keine Bauhöhe zu verlieren, weisen die Schleuderscheiben 6 eine hutförmig nach oben gezogene Nabe 32 auf, die die Ausgangswelle 17 übergreift. Aus dem gleichen Grund läuft die Oberkante der Wurfflügel 7 nur mit geringem Abstand unterhalb der entsprechend angeschrägten Unterkante des Auslaufs 4 vorbei.

An dem Getriebegehäuse 8 ist eine Halterung 33 befestigt (Figur 2 und 10), die einen abgewinkelten Schacht 34 für eine Abstreuprobe an dessen vertikalen unteren Abschnitt 35 aufnimmt. Der Abschnitt 35 ist in der Halterung 33 drehbar und begrenzt verschiebbar, so daß er aus der in Figur 9 und 10 mit durchgezogenen Linien wiedergegebenen Position für die Abstreuprobe, bei der er den Dünger nach Abnehmen der Schleuderscheibe von der Ausgangswelle 17 am Getriebegehäuse 8 vorbei nach unten leitet, durch Verschieben nach unten und anschließendes Verdrehen in die in Figur 9 strichpunktierte Lage während des Streubetriebs am Streuer verbleiben kann.

## Patentansprüche

1. Schleuderstreuer für rieselfähiges Streugut, insbesondere Dünger, der vom Dreipunkt eines Schleppers aufgenommen und antriebsmäßig mit dessen Zapfwelle über eine Gelenkwelle verbunden ist, mit einem Rahmen (9), einem von diesem aufgenommenen Vorratsbehälter (1) mit geneigten Seitenwänden und Boden (2), wenigstens zwei einstellbaren Ausläufen (4) beiderseits der Behälter mittelachse (in Fahrtrichtung (11) gesehen) und je einer darunter angeordneten Schleuderscheibe (6) mit Wurfflügeln (7) sowie wenigstens einem im Vorratsbehälter umlaufenden Rührwerk (5), wobei dieses (5) und die Schleuderscheiben (6) - letztere über einen gemeinsamen Getriebezug (19) synchron - von der Gelenkwelle angetrieben sind, dadurch gekennzeichnet, daß der Getriebezug (19) mit den Schleuderscheiben (6) am Rahmen (9) im wesentlichen in Fahrtrichtung (11) verschiebbar geführt und zur Einstellung des die Relativlage zwischen jedem Auslauf (4) und der ihr zugeordneten Schleuderscheibe (6) bestimmenden Aufgabepunktes am Rahmen (9) festsetzbar ist, und daß die Antriebsverbindung der Gelenkwelle mit dem Rührwerk (5) von derjenigen mit den Schleuderscheiben (6) entkoppelt ist oder der Verschiebebewegung des Getriebezugs (19) mit den Schleuderscheiben (6) folgt.

2. Schleuderstreuer nach Anspruch 1, dadurch gekennzeichnet, daß der Getriebezug (19) mit den Schleuderscheiben (6) in einer horizontalen Ebene begrenzt drehbar ist.

3. Schleuderstreuer nach Anspruch 1 oder 2, dadurch gekennzeichnet, daß das Rührwerk (5) über einen von der Gelenkwelle angetriebenen Exzenter (18) und ein Schrittschaltwerk (23, 24, 25) in einer Drehschrittbewegung angetrieben ist.

4. Schleuderstreuer nach Anspruch 1 oder 2, dadurch gekennzeichnet, daß das Rührwerk (5) über einen von der Gelenkwelle angetriebenen Exzenter (18) oszillierend angetrieben ist.

5. Schleuderstreuer nach Anspruch 1 oder 2, dadurch gekennzeichnet, daß das Rührwerk (5) über einen der Verschiebebewegung des Getriebezugs (19) mit den Schleuderscheiben (6) folgenden, selbstspannenden Endlostrieb angetrieben ist.

6. Schleuderstreuer nach Anspruch 1 oder 2, dadurch gekennzeichnet, daß das Rührwerk (5) über einen der Verschiebebewegung des Getriebezugs (19) mit den Schleuderscheiben (6) folgenden Friktionstrieb angetrieben ist.

7. Schleuderstreuer nach einem der Ansprüche 1 bis 4, dadurch gekennzeichnet, daß der Exzenter (18) auf der Eingangswelle (16) des Getriebezugs (19) der Schleuderscheiben (6) angeordnet ist.

8. Schleuderstreuer nach Anspruch 7, dadurch gekennzeichnet, daß der Exzenter (18) außerhalb des den Getriebezug (19) der Schleuderscheiben (6) umgebenden Gehäuses (8) angeordnet ist.

9. Schleuderstreuer nach Anspruch 7 oder 8, dadurch gekennzeichnet, daß der Exzenter (18) von einer federnden Gabel (23) umgriffen ist und das nachgeschaltete Schrittschaltwerk an eine im Boden (2) des Vorratsbehälters (1) drehbar gelagerte, das Rührwerk (5) aufweisende Achse (26) mit einem die Oszillationsbewegung der Gabel (23) in eine Drehschrittbewegung umsetzenden Freilauf (25) aufweist.

10. Schleuderstreuer nach einem der Ansprüche 7 bis 9, dadurch gekennzeichnet, daß das Drehlager der Rührwerksachse (26) in einem hutförmig in den Vorratsbehälter (1) hineingezogenen Abschnitt (27) des Bodens (2) angeordnet ist, und daß das Rührwerk (5) eine diesen Bodenabschnitt übergreifende hutförmige Nabe (28) mit sich über beide Ausläufe (4) bodennah und im wesentlichen bodenparallel erstreckenden Rührfingern (30) aufweist.

11. Schleuderstreuer nach Anspruch 10 oder 11, dadurch gekennzeichnet, daß die Nabe (28) des Rührwerks (5) auf der Achse (26) lösbar, z. B. mittels eines Bajonettverschlusses, befestigt ist.

12. Schleuderstreuer nach einem der Ansprüche 7 bis 11, dadurch gekennzeichnet, daß der Exzenter (18) und das Schrittschaltwerk (23, 24, 25) so ausgebildet sind, daß ein Exzenterhub einen Drehschritt eines Rührfingers (30) erzeugt, dessen Bogenwinkel etwa dem von einem Auslauf (4) eingenommenen Bogenwinkel entspricht.

13. Schleuderstreuer nach einem der Ansprüche 1 bis 12, dadurch gekennzeichnet, daß die Rührfinger (30) in einem Abstand voneinander angeordnet sind, der etwa dem von dem Auslauf (4) eingenommenen Bogenwinkel entspricht.

14. Schleuderstreuer nach einem der Ansprüche 1 bis 13, dadurch gekennzeichnet, daß der Getriebezug (19) der Schleuderscheiben (6) zwischen zwei fahrtrichtungsparallelen Trägern (10) des Rahmens (9) angeordnet und an diesen verschiebbar geführt ist.

15. Schleuderstreuer nach einem der Ansprüche 1 bis 14, dadurch gekennzeichnet, daß zwischen dem Getriebezug (19) und den Führungen (12) Gelenke (13) angeordnet sind, die ein begrenztes Verschwenken des Getriebezugs in einer horizontalen Ebene gestatten.

16. Schleuderstreuer nach einem der Ansprüche 1 bis 15, dadurch gekennzeichnet, daß an den Trägern (10) Stellspindeln (14) zum Verschieben des Getriebezugs (19) sowie Mittel (15) zum Festsetzen desselben in der eingestellten Lage vorgesehen sind.

17. Schleuderstreuer nach einem der Ansprüche 1 bis 16, dadurch gekennzeichnet, daß die Schleuderscheiben (6) eine stark gewölbte Scheibe mit entsprechend steil ansteigenden Wurfflügeln (7) aufweisen, so daß die auf den Scheiben drehwinkelversetzt angeordneten Wurfflügel mit ihren äußeren Enden einander überlappende Kreisbahnen (31) beschreiben.

18. Schleuderstreuer nach einem der Ansprüche 1 bis 17 mit einem an jeden Auslauf (4) anschließenden, den Dünger an dem Getriebegehäuse (8) nach unten vorbeiführenden Leitorgan zur Vornahme einer Abstreuprobe, dadurch gekennzeichnet, daß das Leitorgan ein abgewinkelter Schacht (34) ist, der mit seinem unteren Abschnitt (35) in einer am Getriebegehäuse (8) angeordneten manschettenartigen Halterung (33) drehbar und begrenzt axial verschiebbar gelagert ist.

19. Schleuderstreuer nach einem der Ansprüche 1 bis 18, dadurch gekennzeichnet, daß die Schleuderscheiben (6) eine hutförmige Nabe (32) aufweisen, mit der sie die Ausgangswelle (17) des Getriebezugs (19) übergreifen.

20. Schleuderstreuer nach einem der Ansprüche 1 bis 19, dadurch gekennzeichnet, daß der Vorratsbehälter (1) mit dem Rührwerk (5), dem Schrittschaltwerk (24, 25) und der federnden Gabel (23) eine Baueinheit bilden, die lösbar am Rahmen (9) befestigt ist.

## Claims

1. Centrifugal spreader for free-flowing spreading material, particularly fertilizer, which is received by the three-point linkage of a tractor and is drive-connected to its power take-off shaft by means of a propeller shaft, having a frame (9), a storage vessel (1) received by the latter, having inclined side walls and a base (8), at least two adjustable outlets (4) on either side of the container central axis considered in the direction of travel (11) and in each case one centrifugal disk (6) positioned below the same and having throwing blades (7), together with at least one stirrer or agitator (5) circulating in the storage container, the stirrer (5) and the centrifugal disks (6), the latter being driven synchronously by means of a common gear train (19), are driven by the propeller shaft, characterized in that the gear train (19) with the centrifugal disks (6) on the frame (9) is displaceably guided substantially in the direction of travel (11) and for the adjustment of the suspension point determining the relative position between each outlet (4) and the associated centrifugal disk (6) can be fixed to the frame (9) and that the drive connection of the propeller shaft to the stirrer (5) is uncoupled from that with the centrifugal disks or follows the displacement movement of the gear train (19) with the centrifugal disks (6).

2. Centrifugal spreader according to claim 1, characterized in that the gear train (19) with the centrifugal disks (6) is rotatable to a limited extent in a horizontal plane.

3. Centrifugal spreader according to claim 1 or 2, characterized in that the stirrer (5) is driven by means of an eccentric (18) driven by the propeller shaft and a stepping mechanism (23, 24, 25) in a rotary step movement.

4. Centrifugal spreader according to claim 1 or 2, characterized in that the stirrer (5) is driven in oscillating manner by means of an eccentric (18) driven by the propeller shaft.

5. Centrifugal spreader according to claim 1 or 2, characterized in that the stirrer (5) is driven by means of a self-tightening continuous drive following the displacement movement of the gear train (19) with the centrifugal disks (6).

6. Centrifugal spreader according to claim 1 or 2, characterized in that the stirrer (5) is driven by means of a friction drive following the displacement movement of the gear train (19) with the centrifugal disks (6).

7. Centrifugal spreader according to one of the claims 1 to 4, characterized in that the eccentric (18) is located on the input shaft (16) of the gear train (19) of the centrifugal disks (6).

8. Centrifugal spreader according to claim 7, characterized in that the eccentric (18) is positioned outside the casing surrounding the gear train (19) of the centrifugal disks (6).

9. Centrifugal spreader according to claim 7 or 8, characterized in that the eccentric (18) is embraced by a resilient fork (23) and the following stepping mechanism on a shaft (26) having the stirrer (5) and mounted in rotary manner in the base (2) of the storage container (1) has a freewheel (25) converting the oscillatory movement of the fork (23) into a rotary step movement.

10. Centrifugal spreader according to one of the claims 7 to 9, characterized in that the pivot bearing of the stirrer shaft (26) is located in a cap-shaped portion (27) of the base (2) drawn into the storage container (1) and that the stirrer (5) has a cap-shaped hub (28) engaging over said base portion and with stirring fingers (30) extending close to the ground over both outlets (4) and substantially parallel to the ground.

11. Centrifugal spreader according to claim 10 or 11, characterized in that the hub (28) of the stirrer (5) is detachably fixed to the shaft (26), e.g. by means of a bayonet catch.

12. Centrifugal spreader according to one of the claims 7 to 11, characterized in that the eccentric (18) and the stepping mechanism (23, 24, 25) are so constructed that an eccentric stroke produces a rotary step of a stirring finger (30), whose arc angle approximately corresponds to the arc angle assumed by an outlet (4).

13. Centrifugal spreader according to one of the claims 1 to 12, characterized in that the stirring fingers (30) have a spacing from one another which roughly corresponds to the arc angle assumed by the outlet (4).

14. Centrifugal spreader according to one of the claims 1 to 13, characterized in that the gear train (19) of the centrifugal disks (6) is arranged between and displaceably guided on two travel direction-parallel supports (10) of the frame (9).

15. Centrifugal spreader according to one of the claims 1 to 14, characterized in that joints (13) are positioned between the gear train (19) and the guides (12) so as to allow a limited pivoting of the gear train in a horizontal plane.

16. Centrifugal spreader according to one of the claims 1 to 15, characterized in that on the supports (10) are provided adjusting spindles (14) for displacing the gear train (19) and means (15) for fixing the same in the set position.

17. Centrifugal spreader according to one of the claims 1 to 16, characterized in that the centrifugal disks (6) have a strongly curved disk with correspondingly steeply rising throwing blades (7), so that the throwing blades arranged in rotation angle-displaced manner on the disks describe with their outer ends overlapping circular paths (31).

18. Centrifugal spreader according to one of the claims 1 to 17 with a guide member for carrying out a spreading test connected to each outlet (4) and guiding the fertilizer downwards past the gearbox (8), characterized in that the guide member is an angled shaft (34), whose lower portion (35) is rotatable in a sleeve-like mounting support (33) arranged on the gearbox (8) and is mounted so as to be axially displaceable to a limited extent.

19. Centrifugal spreader according to one of the claims 1 to 18, characterized in that the centrifugal disks (6) have a cap-shaped hub (32) with which they engage over the output shaft (17) of the gear train (19).

20. Centrifugal spreader according to one of the claims 1 to 19, characterized in that the storage container (1) with the stirrer (5), the stepping mechanism (24, 25) and the resilient fork (23) form a constructional unit, which is detachably fixed to the frame (9).

## Revendications

1. Epandeur centrifuge pour matériau d'épandage susceptible d'écoulement, en particulier engrais, porté par l'attelage à trois points d'un tracteur et relié en entraînement à sa prise de force par l'intermédiaire d'un arbre articulé, comprenant un châssis (9), un réservoir de stockage (1) porté par celui-ci, comportant des parois latérales inclinées et un fond (2), au moins deux sorties d'écoulement (4) réglables de deux côtés de l'axe médian du réservoir vu dans la direction de marche, et un disque d'épandage (6) disposé sous chacune d'elles, présentant des ailettes de projection (7), ainsi qu'un dispositif d'agitation (5) tournant dans le réservoir de stockage, celui-ci (5) et les disques d'épandage (6) - ces derniers de manière synchronisée par l'intermédiaire d'un même train d'engrenages (19) - étant entraînés par l'arbre articulé, caractérisé en ce que l'ensemble formé par le train d'engrenages (19) et les disques d'épandage (6) est guidé en déplacement de coulissement le long du cadre (9) sensiblement dans la direction de marche (11) et peut être immobilisé sur le châssis (9), pour le réglage de la position relative entre chaque sortie d'écoulement (4) et le disque associé d'épandage (6), et en ce que la liaison d'entraînement de l'arbre articulé comportant le dispositif d'agitation (5) est désaccouplée de celle avec les disques d'épandage (6), ou bien suit le mouvement de déplacement du train d'engrenages (19) avec les disques d'épandage (6).

2. Epandeur selon la revendication 1, caractérisé en ce que l'ensemble formé par le train d'engrenages (19) et les disques d'épandage (6) peut être pivoté de façon limitée dans un plan horizontal.

3. Epandeur selon l'une des revendications 1 ou 2, caractérisé en ce que le dispositif d'agitation (5) est entraîné en pas de rotation par l'intermédiaire d'un excentreur (18) entraîné par l'arbre articulé et d'un dispositif d'entraînement pas à pas (23,24,25).

4. Epandeur selon l'une des revendications 1 ou 2, caractérisé en ce que le dispositif d'agitation (5) est entraîné en mouvement oscillant par l'intermédiaire d'un excentreur (18) entraîné par l'arbre articulé.

5. Epandeur selon l'une des revendications 1 ou 2, caractérisé en ce que le dispositif d'agitation (5) est entraîné par l'intermédiaire d'un entraînement continu à détente automatique suivant le mouvement de déplacement du train d'engrenages (19) avec les disques d'épandage (6).

6. Epandeur selon l'une des revendications 1 ou 2, caractérisé en ce que le dispositif d'agitation (5) est entraîné par l'intermédiaire d'un entraînement à friction suivant le mouvement de déplacement du train d'engrenages avec les disques d'épandage (6).

7. Epandeur selon l'une des revendications 1 à 4, caractérisé en ce que l'excentreur (18) est disposé sur l'arbre d'entrée (16) du train d'engrenages (19) des disques d'épandage (6).

8. Epandeur selon la revendication 7, caractérisé en ce que l'excentreur (18) est disposé à l'extérieur du carter entourant le train d'engrenages (19) des disques d'épandage (6).

9. Epandeur selon l'une des revendications 7 ou 8, caractérisé en ce que l'excentreur (18) est enserré dans une fourche élastique (23) et en ce que le dispositif d'entraînement pas à pas est relié à un axe (26) monté à rotation sur un palier dans le fond (2) du réservoir de stockage (1) et portant le dispositif d'agitation (5), avec une roue libre (25) transformant le mouvement d'oscillation de la fourche (23) en un mouvement de rotation pas à pas.

10. Epandeur selon l'une des revendications 7 à 9, caractérisé en ce que le palier de rotation de l'axe (26) du dispositif d'agitation est disposé dans une zone (27) du fond (2) en forme de chapeau dirigée vers l'intérieur du réservoir de stockage (1) et en ce que le dispositif d'agitation (5) présente un moyeu (28) en forme de chapeau entourant cette partie du fond, avec des doigts de trituration (30) s'étendant au-dessus des deux sorties d'écoulement (4) près du fond et sensiblement parallèles à celui-ci.

11. Epandeur selon l'une des revendications 10 ou 11, caractérisé en ce que le moyeu (28) du dispositif d'agitation (5) est fixé sur l'axe (26) de manière démontable, par exemple au moyen d'un emboîtement à baïonnette.

12. Epandeur selon l'une des revendications 7 à 11, caractérisé en ce que l'excentreur (18) et le dispositif d'entraînement pas à pas (23,24,25) sont conformés de telle sorte qu'une came d'excentreur produit un pas de rotation d'un doigt de trituration (30) dont le secteur angulaire correspond environ au secteur angulaire comprenant une sortie d'écoulement (4).

13. Epandeur selon l'une des revendications 1 à 12, caractérisé en ce que les doigts de trituration (30) sont disposés selon un écartement mutuel qui correspond environ au secteur angulaire comprenant une sortie d'écoulement (4).

14. Epandeur selon l'une des revendications 1 à 13, caractérisé en ce que le train d'engrenages (19) des disques d'épandage est disposé entre deux supports (10) du châssis (9) parallèles à la direction de marche et est monté déplaçable sur ceux-ci.

15. Epandeur selon l'une des revendications 1 à 14, caractérisé en ce que des articulations (13) sont disposées entre le train d'engrenages (19) et les guides (12), ces articulations permettant un pivotement limité du train d'engrenages dans un plan horizontal.

16. Epandeur selon l'une des revendications 1 à 15, caractérisé en ce qu'il est prévu, sur les supports (10), des tiges de réglage (14) pour le déplacement du train d'engrenages (19), ainsi que des moyens (15) pour l'immobilisation de celui-ci dans la position.

17. Epandeur selon l'une des revendications 1 à 16, caractérisé en ce que les disques d'épandage (6) présentent un disque fortement bombé à ailettes de projection (7) appropriées fortement relevées, de sorte que les ailettes de projection disposées sur les disques et décalées angulairement décrivent avec leurs extrémités extérieures des cercles (31) se recouvrant l'un l'autre.

18. Epandeur selon l'une des revendications 1 à 17, comprenant un organe de guidage se fixant à chaque sortie d'écoulement (4) et dirigeant l'engrais vers le bas en contournant le carter (8) des engrenages, en vue d'une prise d'échantillon, caractérisé en ce que l'organe de guidage est un conduit coudé (34) monté sur palier par sa partie inférieure (35) dans une bride de support (33) en forme de manchette disposé contre le carter (8) des engrenages, monté mobile en rotation et limité en coulissement axial.

19. Epandeur selon l'une des revendications 1 à 18, caractérisé en ce que les disques d'épandage (6) présentent un moyeu (32) en forme de chapeau, par lequel ils entourent les arbres de sortie (17) du train d'engrenages (19).

20. Epandeur selon l'une des revendications 1 à 19, caractérisé en ce que le réservoir de stockage (1) et le dispositif d'agitation (5), le dispositif d'entraînement pas à pas (24,25) et la fourche élastique (23) constituent une unité constructive fixée sur le châssis (9) de manière amovible.
